# EUROPEAN PATENT SPECIFICATION

(11) **EP 3 822 596 B1**
(45) Date of publication and mention of the grant of the patent: **11.10.2023**
(21) Application number: 19208929.0
(22) Date of filing: 13.11.2019
(51) Int. Cl.: G01K 1/08

(54) **METHOD FOR MANUFACTURING A SENSING TIP FOR A TEMPERATURE SENSING DEVICE, TEMPERATURE SENSING DEVICE, COMBUSTION ENGINE AND VEHICLE COMPRISING THE SAME**
VERFAHREN ZUR HERSTELLUNG EINER MESSSPITZE FÜR EINE TEMPERATURMESSVORRICHTUNG, TEMPERATURMESSVORRICHTUNG, VERBRENNUNGSMOTOR UND FAHRZEUG DAMIT
PROCÉDÉ DE FABRICATION D'UNE POINTE DE DÉTECTION POUR UN DISPOSITIF DE DÉTECTION DE LA TEMPÉRATURE, DISPOSITIF DE DÉTECTION DE LA TEMPÉRATURE, MOTEUR À COMBUSTION ET VÉHICULE LE COMPRENANT

(43) Date of publication of application: 19.05.2021
(73) Proprietor: HIDRIA d.o.o., 1000 Ljubljana (SI)
(72) Inventor: KENDA, Jani, 5220 TOLMIN (SI); MILOST, Uros, 5000 Nova Gorica (SI)
(74) Representative: BARRE LAFORGUE

(56) References cited:
- WO-A1-2009/146447
- US-A- 4 934 831

## Description

The invention relates to a method for manufacturing a sensing tip for a temperature sensing device. The invention also relates to a sensing tip for a temperature sensor device obtained by the manufacturing process according to the invention.

In the text:
- the expression "hot junction" or "hot point" means, designates and distinguishes the part of a thermocouple and of a temperature sensor where the two wires of the thermocouple are weld-connected to each other, regardless of the temperature of the thermocouple;
- the term "tip" designates an elongated object wherein one of the longitudinal ends, named distal end, has a cross-sectional diameter smaller than the diameter of the other end, named the proximal end;
- the terms "distal" and "proximal" related to the tip of the temperature sensor according to the invention, distinguish the two ends of the tip, the "distal" end of the tip housing the "hot junction" as defined above and the "proximal" end extending at the opposite longitudinal end of the tip;
- the expression "insulating material" means, unless stated otherwise, any material having an dielectric strength greater than 5 MV/m and a resistivity at room temperature greater than 1 GQ.m.

Different methods of manufacturing tips for temperature sensor are know from the prior art.

US2017/350765 describes, as an illustration of the prior art, a method of manufacturing a temperature sensor comprising the steps of:
- manufacturing a mineral insulated cable (MIC) comprising two wires forming a thermocouple, a metal sleeve protecting the thermocouple extending within the metal sleeve and a mineral material isolating the two wires from one another and from the protective metal sleeve;
- cutting the MIC into a section of MIC;
- extracting a part of the mineral material from one end of the MIC section, so that the two wires of the thermocouple thus emerge from the mineral material at this end, while being supported by the protective sleeve;
- mechanically bringing together the two emerging ends of the wires until they are in contact with each other and then connecting them by electric welding to form the hot junction of the thermocouple;
- filling the emptied terminal part of the protective sleeve with an insulating material, identical or different from the mineral material of the MIC;
- closing the protective sleeve by electric welding, so as to protect the hot junction of the thermocouple, and;
- swaging the distal end of the temperature sensor by drawing so improving the response time of the temperature sensor.

The method disclosed in US2017/350765 as an illustration of the state of the prior art is difficult to automate as currently involves manual operations which are difficult to realize.

In addition, the distal end of the temperature sensor of US2017/350765 is closed by folding the protective sleeve and welding the same. Due to the welded folds, the distal end of the temperature sensor is not resistive enough to support high temperature strengths. Risks of leakage exist under exposition of the temperature sensor to high temperature conditions.

One aim of the invention is to address at least partially these drawbacks.

US2017/350765 also describes a method of manufacturing a temperature sensor comprising the following successive steps:
- introduction of two thermocouple wires in the two longitudinal bores of a support tube made of a ceramic material, typically alumina (Aℓ₂O₃)- or magnesia (MgO)- based material, aluminium nitride (AℓN), boron nitride (BN) or silicon (SiO₂), until the wires protrude at the end of the support tube opposite to the end of introduction of the wires into the support tube;
- folding the ends of the thermocouple wires protruding at the end of said support tube to place them into physical contact and welding them so as to form the hot point of the thermocouple;
- introduction, at least partially, of the support tube into a reinforcement tube made of stainless steel;
- providing with a metallic cap made in "Inconel" designed to cover at least the distal end of the reinforcement tube and the hot point of the thermocouple, said metallic cap presenting a swaging at its distal end, destined to improve the response time of the temperature sensor;
- fixing the metallic cap by laser welding onto the distal end of the reinforcement tube so as to protect the hot point.

US2017/350765 emphasizes that the metallic cap is filled with a powder of insulating material before fixing.

This last method is limited to the manufacture of a temperature sensor with a predetermined length, the predetermined length being determined by the length of the support tube. This last method does not make it possible to increase the length of the temperature probe during its manufacture.

Likewise, according to this last method, the transverse cross-sectional diameter of the temperature sensor is imposed by the transverse cross-sectional diameter of a commercially available support tube. This last method is not universal in that the length and the transverse cross-sectional diameter of the temperature sensor are imposed by the commercial availability of the support tubes.

In addition, as the metallic cap is filled with an insulating material prior it fixation of the metallic cap onto the reinforcement tube, this last method does not enable in reality to produce an insulating material of high compactness in the distal end of the temperature sensor.

One aim of the invention is to address at least partially these drawbacks.

EP 2 199 768 describes a method of manufacturing a temperature sensor comprising the steps of:
- inserting a temperature sensor element mounted on a base element into a forming tool;
- filling a mineral powder into the forming tool;
- shaping the mineral powder by pressing the mineral powder with a stamp, whereby the mineral powder is solidified;
- removing the temperature sensor element with the solidified mineral powder from the forming tool,
- putting a protective metallic cap on the solidified mineral powder;
- remoulding the mineral powder by pressing the protective cap to the mineral powder, and;
- connecting the base element with the cap.

The method of EP 2 199 768 is problematic. Indeed, due to the solidification of the mineral powder resulting of the shaping step, the application of the solid protective metallic cap on the solidified mineral powder does not allow to form an effective thermally conductive contact between the solidified mineral powder and the metallic cap and between the hot point and the metallic cap. The method of

EP 2 199 768 fails to improve the sensitivity of the temperature sensor. It also fails to decrease the response time of the temperature sensor.

Document US 4, 934, 831 discloses a temperature sensing element for high temperature application, housed inside a metal tube, with lead wires to the temperature sensing element insulated from each other and the tube by a compactable mineral insulation material.

Document WO 2009/146447 discloses a temperature sensor capable of operation in high vibration environment, including a sensor sheath mounted at the distal end of a mineral insulated cable. A resistance temperature detector (RTD) sensing element is connected to leads of the cable within the sheath. The sheath is filled at least partially with a ceramic thermal adhesive.

One aim of the invention is to address at least partially this drawback.

Particularly, the invention aims to provide with a method for manufacturing a temperature sensor -notably a high temperature sensor-, avoiding the use of predetermined mineral insulated cable (MIC).

The invention also aims to provide with a low-cost method for the manufacture of a temperature sensor and with a low-cost temperature sensor.

The invention also aims to provide with a method for the manufacture of a temperature sensor presenting low risks of leakage under high temperature conditions.

The invention also aims to provide with a method for the manufacture of a temperature sensor with improved sensitivity and/or decreased response time.

The invention also aims to provide with a method for the manufacture of a tip for a temperature sensor of universal length, regardless to the length of the temperature sensor itself.

The invention also aims to provide with a method for the manufacture of a tip for a temperature sensor of universal diameter, regardless to the diameter of the temperature sensor itself.

Therefore, the invention relates to a method for manufacturing a sensing tip for a temperature sensing device according to claim 1.

The method according to the invention enables the manufacture of a sensing tip for a high temperature sensing device, said sensing tip being so manufactured to be resistive to high stress and high temperature -especially in the range of 1200°C or greater- conditions. The method according to the invention allows the manufacture at low-cost of a sensing tip for a temperature sensor device. The method according to the invention also allows the manufacture of a low-cost sensing tip for a temperature sensing device. The method according to the invention enables the manufacture of a sensing tip for a temperature sensing device wherein said distal end of the sensing tip is highly thermal conductive and makes it possible to provide with a temperature sensing device with reduced response time.

The mineral powdered material is chosen in the group formed of thermal conductive ceramic powders and of mineral powdered materials of lowest thermal conductivity than the thermal conductivity of the thermal conductive ceramic powder. layer The method according to the invention comprises filling the cylinder-shaped container with at least one thermal conductive ceramic powder forming said distal layer, and subsequently filing the space left free by the at least one thermal conductive ceramic powder in the cylinder-shaped container with a mineral powdered material distinct of the at least one thermal conductive ceramic powder. In some embodiments, the thermal conductive ceramic powder is selected in the group formed of boron nitride (BN) powders and of aluminium nitride (AℓN) powders and mixtures thereof.

The mineral powdered material is of thermal conductivity at 20°C less than the thermal conductivity at 20°C of the thermal conductive ceramic powder. The mineral powdered material is selected in the group formed of zirconium dioxide (ZrO₂), magnesium oxide (MgO), alumina (Aℓ₂O₃) or other materials of thermal conductivity at 20°C less than the thermal conductivity at 20°C of the thermal conductive ceramic powder. The method according to the invention enables the manufacture of a sensing tip for a temperature sensing device with reduced costs.

In a particular embodiment, the method according to the invention comprises the steps of:
- assembling together a tube with two open longitudinal ends, named extension tube, and a tube with one closed longitudinal end, named bottomed tube by longitudinal alignment of said extension tube and said bottomed tube, thus forming the cylinder-shaped container, and;
- disposing the thermocouple into the cylinder-shaped container, so that;

said hot junction of the thermocouple is positioned at said distal end, said hot junction linking a first longitudinal end of a first metal wire of the thermocouple and a first longitudinal end of a second metal wire of the thermocouple, and so that;
a second end of the first metal wire and a second end of the second metal wire protrude from said proximal end of the cylinder-shaped container and are destined to be connected to terminals of a voltmeter ;
the first metal wire and the second metal wire being made of distinct materials and so chosen to form the thermocouple.

In this particular embodiment, said bottomed tube and said extension tube are coaxially assembled so that the open end of said bottomed tube communicates with one open end of said extension tube. Said extension tube and said bottomed tube can be assembled by any means. Said extension tube and said bottomed tube can be assembled by welding of one of said bottomed tube and said extension tube to the other. They can also be assembled by screwing of one of said extension tube and of said bottomed tube to the other. In some embodiments, said extension tube and said bottomed tube are made of the same material. However, nothing prevents the extension tube and the cylinder-shaped container from being made in distinct materials.

In this particular embodiment of a method according to the invention, nothing prevents from merging together -notably from welding together- one open end of said extension tube and the open end of said bottomed tube at any stage of the fabrication process. Said extension tube and said bottomed tube can be welded together at any stage of the fabrication process and by any welding technique, including laser welding, discharge welding, plasma welding, ultrasonic techniques or any other adapted technique. In a particular embodiment of a method according to the invention, said extension tube and said bottomed tube are welded together to form the cylinder-shaped container, said bottomed tube being free of any mineral powdered material and/or free of thermocouple. However, in another particular embodiment according to the invention, said extension tube and said bottomed tube are welded together to form the cylinder-shaped container, said bottomed tube containing the thermocouple and a quantity of at least one mineral powdered material.

In a particular embodiment of a method according to the invention, starting from a set of bottomed tubes with a unique set of dimensions -unique length, unique diameter and unique thickness- enable the manufacture of a large set of sensing tips with various dimensions -notably, various lengths and various diameters- and various shapes. Particularly, the method according to the invention makes it possible to use bottomed tubes formed by a forming process. In a preferred embodiment, the forming process is a deep drawing process applied to a metal sheet. In this preferred embodiment, the deep drawing process requires a unique forming die and a unique punch. Bottomed tubes with the same shape and dimensions can be used for manufacturing various sensing tips and temperature sensing devices with various shapes and dimensions. In that, the bottomed tube used to manufacture the sensing tip of the temperature sensing device is said "universal". The length and diameter of the sensing tip and of the temperature sensing device comprising said sensing tip are chosen regardless to the length and the diameter of the bottomed tube. As the forming die and the punch are expensive devices, the method according to this particular embodiment using a unique forming die and a unique punch is thus costs limiting. Nothing prevents however the forming process from being any other process. Nothing prevents however the forming process from being a cold forging technology, as this cold forging technology enable the production of a bottomed tube with the desired shape.

The bottomed tube is so chosen to be able to protect the thermocouple against combined aggressive conditions such as long term exposition of the sensing tip to oxidation, to sulphur-rich environment, to thermal shocks, etc... In some embodiments, the bottomed tube is made of an alloy with good resistance to stress, to oxidation and to corrosion at high temperature. The bottomed tube is also so chosen to be thermal conductive. In some embodiments of a method according to the invention, the bottomed tube is made in a material -notably a metallic alloy- chosen in the group formed of thermal conductive materials. In some embodiments, the bottomed tube is made of an alloy chosen in the group formed of stainless steels and of alloys comprising nickel and chromium. In certain preferred embodiments, the bottomed tube is made of an alloy chosen in the group formed of stainless steels, Inconel^{®}600 and Inconel^{®}601.

The bottomed tube can present any shape. In some embodiments of a method according to the invention, the bottomed tube presents a circular form in any cross section. The outer diameter in any transverse cross section of the bottomed tube is comprised between 3 mm and 20 mm, notably between 3 mm and 10 mm. However, nothing prevents the bottomed tube from presenting a transverse cross section of different shape, for example a regular polygon, like a hexagon, a pentagon or the same. In some embodiments, the bottomed tube presents a hemispherical-shaped bottom and a cylindrical-shaped lateral wall. However, nothing prevents the bottomed tube from presenting a flat bottom and a cylindrical-shaped lateral wall. Nothing prevents the bottomed tube from presenting a cone-shaped bottom, a pyramid-shaped bottom or a frustum-shaped (cone or pyramid) bottom.

In some embodiments, the internal diameter of the cross section of said extension tube is equal to the internal diameter of the cross section of said bottomed tube. The external diameter of the cross section of said extension tube is equal to the external diameter of the cross section of said bottomed tube. In some embodiments, the external diameter of the cross section of said extension tube is equal to the external diameter of the cross section of said bottomed tube, and the internal diameter of the cross section of said extension tube is less than the internal diameter of the cross section of said bottomed tube. However, nothing prevents that the internal diameter of the cross section of said extension tube from being sensibly equal to or slightly less than the external diameter of the cross section of said bottomed tube so that the said bottomed tube is engaged in said extension tube.

In some embodiments of a method according to the invention, the thermocouple is chosen in the group of thermocouples of type N and of thermocouples of type K. However, nothing prevents the thermocouple from being of another type, especially of type E, of type J or of type M.

The first and the second metal wire of the thermocouple are chosen to be rigid in flexion, rigid in longitudinal traction and in compression. The thermocouple is so disposed in said bottomed tube and in the cylinder-shaped container that the first metal wire and the second metal wire present elongation axes substantially parallel to each other and substantially parallel to the axe of elongation of said bottomed tube and of the cylinder-shaped container. In a particular embodiment, the thermocouple is so disposed in the cylinder-shaped container that said hot junction of the thermocouple is in contact with the inner face of said bottomed tube at said distal end. However, nothing prevents said hot junction from extending at short distance -that is to say at a distance of about 1 to 2 mm- of the inner face of said bottomed tube at said distal end.

In a preferred embodiment of a method according to the invention, said bottomed tube is a weldless bottomed tube. The weldless bottomed tube displays only limited -notably no- risk of leakage when submitted to high stress and high temperature conditions. The weldless bottomed tube presents a mechanical resistance to high chemical stress and high temperature -susceptible to be encountered by the sensing tip- which is increased as regard to welded bottom tubes. The bottomed tube is a weldless bottomed tube formed by submitting a single metal sheet to a deep drawing process or to any forming process, such as for example a cold forging technology enabling the production of a bottomed tube with the desired shape. However, nothing prevents the weldless cylinder-shaped from being formed by melting and/or hot-forming.

In a particular embodiment of a method according to the invention, step b) comprises:
b1). forming said distal layer of said thermal conductive ceramic powder, wherein the thermal conductive ceramic powder contacts said hot junction and an inner face of the cylinder-shaped container at said distal end, then;
b2). completing the filling of the free space of the cylinder-shaped container with a quantity of a mineral powdered material with lower thermal conductivity than the thermal conductivity of the thermal conductive ceramic powder forming said distal layer of the thermal conductive ceramic powder, whereby forming a sensing tip with improved thermal conductivity at said distal end and lesser thermal conductivity at said proximal end.

In this particular embodiment, a quantity of at least one thermal conductive ceramic powder is dispensed into the cylinder-shaped container, so that said at least one thermal conductive ceramic powder fills at least a part, named distal part, of the free space left by the thermocouple inside the cylinder-shaped container.

In a particular embodiment, a method according to the invention comprises (step c).) applying a radial shrinking strength to at least said distal end of the sensing tip, thus forming a sensing tip with increased compactness of the thermal conductive ceramic powder at least at said distal end. Increased compactness of the thermal conductive ceramic powder at least at said distal end provides with an improved response time of the temperature sensing device. Increased compactness of the mineral powdered material at least at said proximal end provides with improved mechanical properties -notably rigidity- of the sensing tip. The application of a radial shrinking strength can be performed by any suitable method, for example by radial clamping, by forming (hot-forming or cold-forming), by stamping, by cold or hot-forging, by hammering or by magneto forming.

In a preferred embodiment, a method according to the invention comprises:
- c1). applying to the sensing tip throughout its total length extending from said distal end to said proximal end, a radial shrinking strength adapted to form a - radially- shrunk sensing tip of constant diameter in cross section from said distal end to said proximal end, thus improving the mechanical resistance of the shrunk sensing tip and of the sensing tip, and;
- c2). applying to said distal end of the sensing tip and only to said distal end, a radial shrinking step to form a sensing tip with increased compactness of the thermal conductive ceramic powder at said distal end, thus improving response time of the temperature sensing device. The application of a radial shrinking strength to at least said distal end of the sensing tip enables a reduction in size of the diameter of the cross section of said distal end of the bottomed tube, to a final diameter value of about 2 mm to about 4 mm, reaching increased compactness of the thermal conductive ceramic powder at said distal end and decreased response time of the temperature sensing device. The application of a radial shrinking strength can be performed by any method. It can be performed by circular clamping with a circular press.

In this preferred embodiment, the diameter of said bottomed tube being in the range of 3 mm to 10 mm, the first step c1). enables the reduction of the diameter of the cross section of said bottomed tube to reach 3 mm to 5 mm, and the second step c2). enables the reduction of the diameter of the cross section of said distal end at said distal end to reach 2 mm to 3 mm.

In some embodiments of a method according to the invention, the thermal conductive ceramic powder is so chosen to present:
- a thermal conductivity at 20°C of at least 3 W.m⁻¹.K⁻¹, notably greater than 10 W.m⁻¹.K⁻¹, particularly greater than 100 W.m⁻¹.K⁻¹, and;
- an electrical resistivity at room temperature -notably at 20°C- greater than 1 GΩ.m, for example in the range of 1 GΩ.m to 10³ GΩ.m. The thermal conductive ceramic powder is an electric insulating ceramic powder. The thermal conductive ceramic powder is chemically resistant to oxidation and physically resistant to high temperature.

In some embodiments of a method according to the invention, the mineral powdered material and the thermal conductive ceramic powder are distinct materials. In some embodiments of a method according to the invention, the mineral powdered material is a mineral powdered material of thermal conductivity at 20°C less than the thermal conductivity at 20°C of the thermal conductive ceramic powder. In some embodiments of a method according to the invention, the mineral powdered material is a mineral powdered electric insulating material of thermal conductivity at 20°C less than the thermal conductivity at 20°C of the thermal conductive ceramic powder.

In a particular embodiment, the method according to the invention comprises the steps as described in claim 1 and its dependent claims.

The invention also extends to a sensing tip -especially to a universal sensing tip- for a temperature sensing device -especially for a high temperature sensing device- obtained by a method according to the invention.

The invention also extends to a sensing tip for a temperature sensing device according to claim 9.

In some embodiments, the cylinder-shaped container is formed of a tube with two open longitudinal ends, named extension tube, and a tube with one closed end, named bottomed tube, longitudinally aligned and solidarized with each other, one open longitudinal end of said extension tube being hermetically linked -notably welded- to the open longitudinal end of said bottomed tube. In some embodiments, said bottomed tube is a weldless tube with one closed longitudinal end.

In some embodiments, the sensing tip comprises a layer of at least one mineral powdered material contacting the layer of thermal conductive ceramic powder, -extending to said proximal end of the cylinder-shaped container- and completing the filling of the cylinder-shaped container, said mineral powdered material being distinct of said thermal conductive ceramic powder and presenting a thermal conductivity lower than the thermal conductivity of the thermal conductive ceramic powder.

In some embodiments, said distal end presents a diameter of a transverse cross section smaller than the diameter of a transverse cross section of the sensing tip at said proximal end.

The invention also extends to a temperature sensing device comprising a sensing tip according to the invention wherein the first metal wire and the second metal wire are connected to a voltmeter.

In some embodiments, the temperature sensing device comprises a sealing flange for ensuring the sealing of a compartment accommodating the sensing tip and wherein the temperature is to be sensed. The temperature sensing device also comprises a mounting nut for securing the sealing of the sensing tip to the compartment.

The invention also extends to a combustion engine comprising a temperature sensing device according to the invention. The invention also extends to an engine vehicle comprising a high temperature sensing device according to the invention.

Further aims, features and advantages of the invention will become apparent upon reading the following description, which is provided by way of a non-limiting example of some of its possible embodiments, and with reference to the accompanying drawings, in which:
- Figure 1 is an illustration of a group of initial steps of a method -illustrated in the Figures 1, 2 and 3 successively- for manufacturing a sensing tip for a temperature sensing device according to a first embodiment of the invention;
- Figure 2 is an illustration of a group of further steps -subsequent to the group of initial steps of Figure 1- of a method for manufacturing a sensing tip for a temperature sensing device according to the first embodiment of the invention;
- Figure 3 is an illustration of a group of ultimate steps -subsequent to the group of further steps of Figure 2- of a method for manufacturing a sensing tip for a temperature sensing device according to the first embodiment of the invention;
- Figure 4 is an illustration of a group of initial steps of a method -illustrated in the Figures 4, 5 and 6 successively- for manufacturing a sensing tip for a temperature sensing device according to a second embodiment of the invention;
- Figure 5 is an illustration of a group of further steps -subsequent to the group of initial steps of Figure 4- of a method for manufacturing a sensing tip for a temperature sensing device according to the second embodiment of the invention;
- Figure 6 is an illustration of a group of ultimate steps -subsequent to the group of further steps of Figure 5- of a method for manufacturing a sensing tip for a temperature sensing device according to the second embodiment of the invention;
- Figure 7 is an illustration of a group of initial steps of a method -illustrated in the Figures 7, 8, 9 and 10 successively- for manufacturing a sensing tip for a temperature sensing device according to a third embodiment of the invention;
- Figure 8 is an illustration of a group of subsequent steps -subsequent to the group of initial steps of Figure 7- of a method for manufacturing a sensing tip for a temperature sensing device according to the third embodiment of the invention;
- Figure 9 is an illustration of a group of further steps -subsequent to the group of subsequent steps of Figure 8- of a method for manufacturing a sensing tip for a temperature sensing device according to the third embodiment of the invention;
- Figure 10 is an illustration of a group of ultimate steps -subsequent to the group of further steps of Figure 9- of a method for manufacturing a sensing tip for a temperature sensing device according to the third embodiment of the invention, and;
- Figure 11 is a front view of a temperature sensing device according to the invention.

In the figures illustrative of the invention, the proportions between the different members are not necessarily respected, and this only for the sake of clarity of the presentation.

The invention aims to provide with a cheap, robust and accurate solution for a sensing tip for a temperature -notably a high temperature- sensing device and with a method for manufacturing said sensing tip for a temperature sensing device.

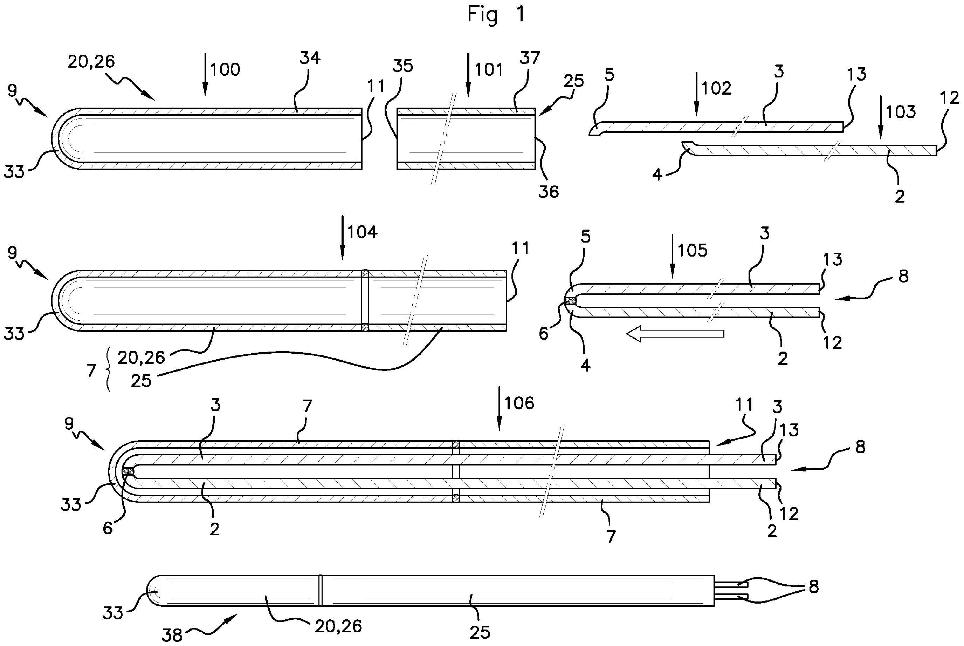

A method for manufacturing a sensing tip for a temperature sensing device according to a first embodiment of the invention is presented in successive Figures 1, 2 and 3. Initial steps of a method according to the first embodiment of the invention are presented Figure 1. The initial steps of this first embodiment comprise:
- providing 100 with a tube, named bottomed tube 26 (represented in radial section) presenting one closed longitudinal end, named distal end 9, and one open longitudinal end, named proximal end 11. Said bottomed tube 26 can be obtained by any suitable method of manufacture of a container in the form of a cylinder closed at one of its longitudinal ends. Preferably, said bottomed tube 26 is formed by deep drawing of a metal sheet with a forming die and a punch. Advantageously, said bottomed tube 26 formed by deep-drawing is a weldless bottomed tube 20 due to the process of manufacture. However, said weldless bottomed tube 20 can be obtained by any method suitable for producing closed weldless containers. Said bottomed tube 20,26 presents a hemispherical-shaped bottom 33 and a cylindrical-shaped wall 34 prolonging the hemispherical-shaped bottom 33. Said bottomed tube 20,26 is made of a unique metal sheet with a thickness of about 0.4 mm to about 1 mm, for example. Said bottomed tube 20,26 can be made of any metal alloy with improved resistance to oxidation and corrosion, even at high temperatures. Said bottomed tube 20,26 is formed of a metal alloy selected in the group formed of nickel/chromium alloys and of nickel/chromium/aluminium alloys. In a preferred embodiment, the material of said bottomed tube 20,26 is selected in the group formed of Inconel^{®}600, Inconel^{®}601 and stainless steels. Typically, the length of said bottomed tubes 20,26 is in the order of few centimetres to about 10 centimetres. The diameter of any transverse section of the cylindrical-shaped wall 34 is in the range of 3 mm to 10 mm -for example of the order of about 5 mm-;
- providing 101 with a tube, named extension tube 25, (represented in radial section) presenting two open longitudinal ends 35,36. Said extension tube 25 can be made of the same metal alloy as the metal alloy of said bottomed tube 20,26 or of a metal alloys distinct of the metal of said bottomed tube 20,26. Advantageously, the metal alloy forming said extension tube 25 can be cheaper than the metal alloy forming said bottomed tube 20,26. In the embodiment represented in successive Figures 1, 2 and 3, the thickness of the wall 37 of said extension tube 25 and the external and internal diameters of said extension tube 25 are the same as the thickness of the cylindrical-shaped wall 34, external and internal diameters of said bottomed tube 20,26. The length of said extension tube 25 is so chosen to enable the manufacture of a temperature sensing device of a predetermined length;
- assembling 104 coaxially by abutment said bottomed tube 20,26 and said extension tube 25 by welding a first longitudinal end 35 of said extension tube 25 and the proximal end 11 of said bottomed tube, so that said extension tube 25 extends longitudinally said bottomed tube 20,26 and form a cylinder-shape container 7;
- providing 102 with a first metal wire 3 (represented in radial section) cut at the appropriate length to match with the length of said bottomed tube 20,26 and said extension tube 25 and with the length of the attended temperature sensing device. The first metal wire 3 can be made of a nickel, silicon and aluminium based alloy. The first metal wire 3 can be made of an alloy composed mainly of nickel, silicon and aluminium, notably of a "NiSil" alloy composed (weight percent) of nickel (95.4%), silicon (4.5%) and magnesium (0.1%);

- providing 103 with a second metal wire 2 (represented in radial section) cut at the appropriate length to match with the length of said bottomed tube 20,26 and said extension tube 25 and with the length of the attended temperature sensing device. The second metal wire 2 is made of a nickel, chromium and silicon based alloy. The second metal wire 2 is made of an alloy composed mainly of nickel, chromium and silicon, notably of a "NiCroSil" alloy composed (weight percent) of nickel (84.5%), chromium (14%) and silicon (1.5%). In some embodiments, the method also comprises slightly folding the ends 4,6 of the first and second metal wires 2,3.
- forming 105 a thermocouple 8 of type N by welding the folded end 5 of the first metal wire 3 and the folded end 4 of the second metal wire 2 to form a hot junction 6 of a thermocouple 8, the metal wires 2,3 being made of distinct materials and so chosen to form the thermocouple 8. Welding of the ends 4,5 of the metal wires 3,2 can be obtained by any welding technique, such as laser welding, discharge welding, ultrasonic techniques, etc. The voltage generated between the free ends of the wires of the thermocouple at equilibrium is stable along lifetime of the thermocouple. The thermocouple of type N has a tolerance of about +/-1.5°C. The temperature sensing device manufactured by a method according to the invention is consequently accurate. However, nothing prevents the thermocouple from being of type K, the first metal wire being made of an alloy "Chromel" composed of nickel and chromium and the second metal wire being made of an alloy "Alumel" composed of nickel, aluminium and silicon. Nothing prevents the thermocouple from being of type E, of type J or of type M;
- introducing 106 the thermocouple 8 into the cylinder-shape container 7 (represented in radial section) so that the thermocouple 8 extends in a free space 14 of the cylinder-shaped container 7, coaxially to the cylinder-shaped container 7, said hot junction of the thermocouple 8 being placed at said distal end 9 of said bottomed tube 20,26 and of the cylinder-shaped container 7. The second ends 12,13 of the first and second metal wires 2,3 forming the thermocouple 8 protrude from said proximal end 11 of the cylinder-shaped container 7. A lateral view of the assembly 38 of the thermocouple 8 and of the cylinder-shaped container 7 is also represented figure 1. In the method of manufacture according to the invention, the length of the assembly 38 is determined by the length of the extension tube, as the length of said bottomed tube 20,26 -particularly the length of said weldless bottomed tube 20- is determined by the process of manufacture of said weldless bottomed tube 20 and by the shape and dimensions of the forming die and punch.

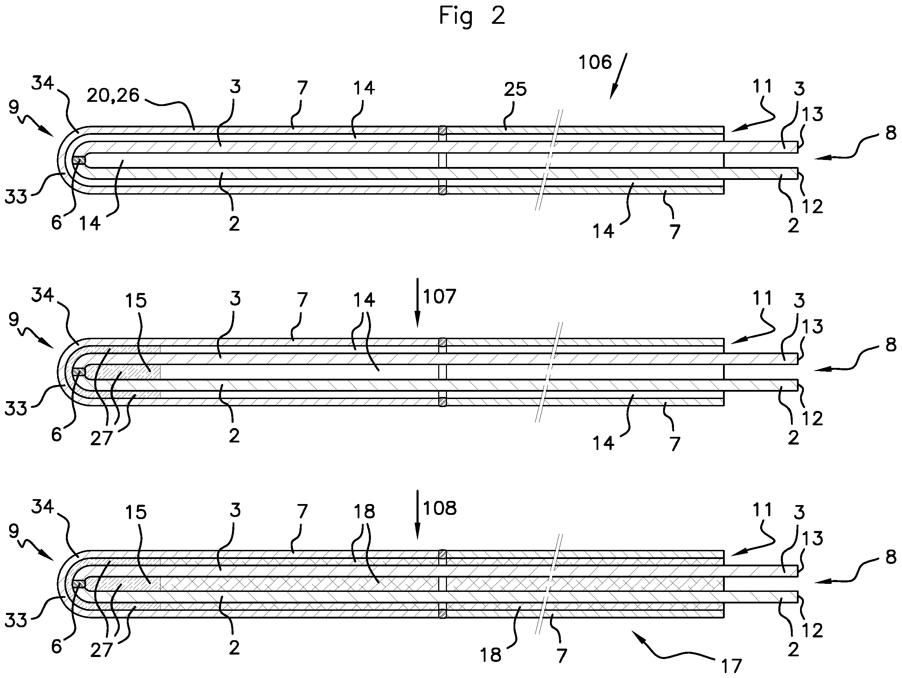

Further steps of a method according to the first embodiment of the invention are presented Figure 2. Further steps of this first embodiment comprise:
- introducing 107 a quantity of a thermal conductive ceramic powder 15 forming a layer 27 of said thermal conductive ceramic powder 15 in the free space 14 extending at said distal end 9 of said bottomed tube 20,26 forming the cylinder-shaped container 7. The thermal conductive ceramic powder 15 forms a thermal conductive contact between said hot junction 6 and said distal end 9 of the cylindrical-shaped wall 34, so that thermal energy of a sensed external medium can reach said hot junction 6 through said thermal conductive ceramic powder 15. Said thermal conductive ceramic powder 15 is selected in the group formed of ceramic material with high thermal conductivity, notably in the group formed of boron nitride (BN) powders and of aluminium nitride (AℓN) powders and mixtures thereof, and then;
- completing 108 the filling of the space 14 left free inside the cylinder-shaped container 7 by the thermocouple 8 and the layer 27 of the thermal conductive ceramic powder 15 with an appropriate quantity of a mineral powdered material 18 of thermal conductivity lower than the thermal conductivity of the thermal conductive ceramic powder 15. However, in some embodiments not part of this invention, nothing prevents the mineral powdered material 18 from being a thermal conductive ceramic powder identical or different of the thermal conductive ceramic powder 15 forming the layer 27. Advantageously, the mineral powdered material 18 is cheaper than the thermal conductive ceramic powder 15 and the cost for manufacturing the sensing tip 1 is reduced. The mineral powdered material 18 can be selected in the group formed of zirconium dioxide (ZrO₂), magnesium oxide (MgO), alumina (Aℓ₂O₃) or other materials of thermal conductivity less than the thermal conductivity of the thermal conductive ceramic powder. With the completion of the filling 108, a sheeted thermocouple 17 is formed.

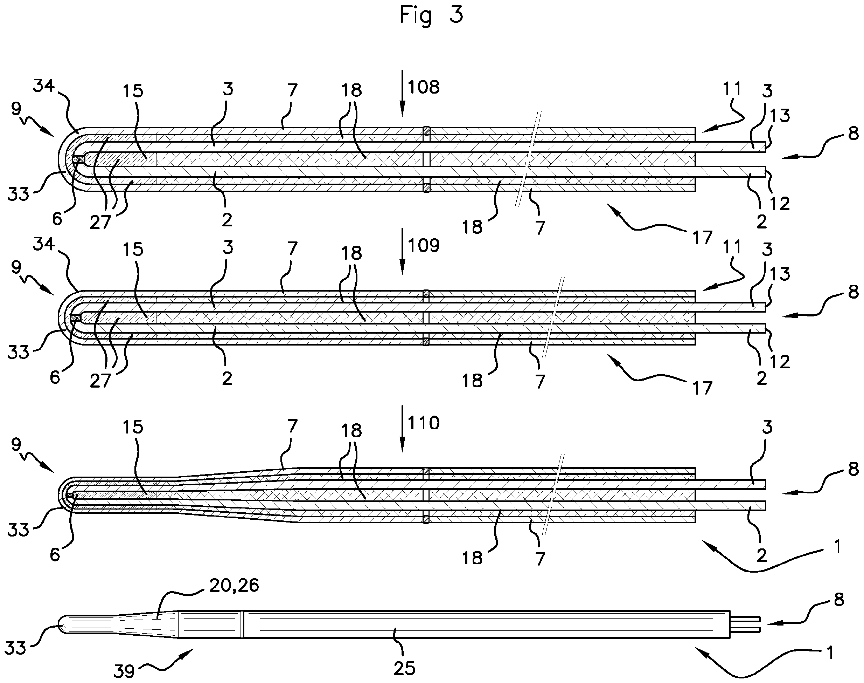

Ultimate steps of a method according to the first embodiment of the invention are presented Figure 3. Ultimate steps of this first embodiment comprise:
- applying 109 to the sheeted thermocouple 17 throughout its total length extending from said distal end 9 to said proximal end 11, a radial shrinking strength adapted to form a shrunk sensing tip 19 of constant diameter in cross section from said distal end 9 to said proximal end 11, thus improving the mechanical resistance of the shrunk sensing tip 19 and of the sensing tip 1, and;
- applying 110 to said distal end 9 of the shrunk sensing tip 19 and only to said distal end 9, a radial shrinking strength to form a sensing tip 1 with increased compactness of the thermal conductive ceramic powder 15 at said distal end 9. A lateral view 39 of the sensing tip 1 according to the invention is also represented figure 3. The applications 109,110 of the radial shrinking strength can be performed by any suitable swaging method, for example by radial clamping, by forming (hot-forming or cold-forming), by stamping, by cold or hot-forging, by hammering or by magneto forming.

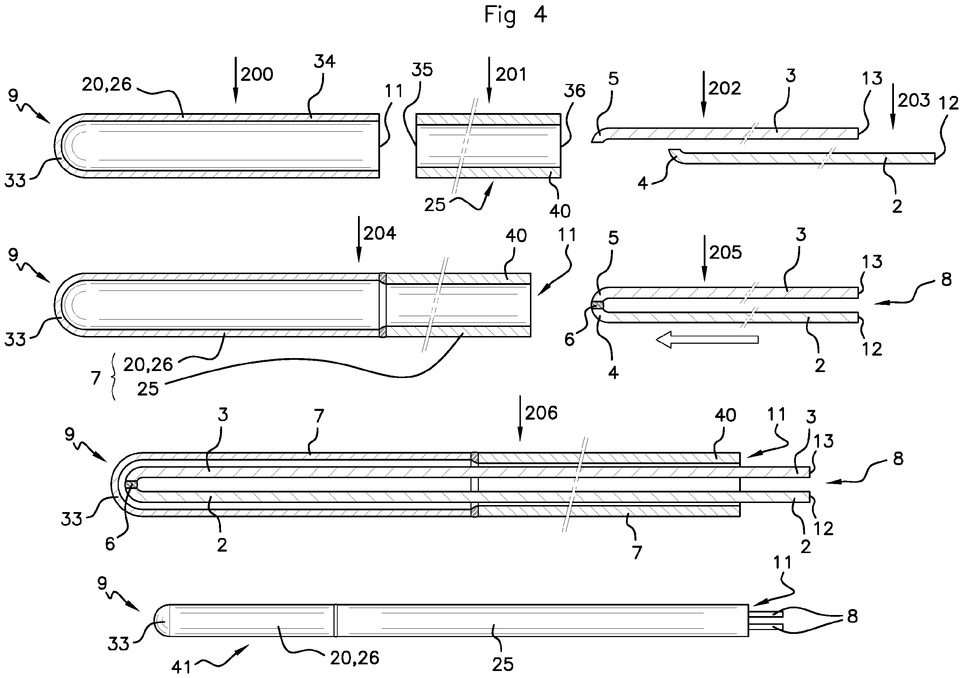

A method for manufacturing a sensing tip for a temperature sensing device according to a second embodiment of the invention is presented in successive Figures 4, 5 and 6. Initial steps of a method according to the second embodiment of the invention are presented Figure 4. The initial steps of this first embodiment comprise:
- providing 200 with a tube, named bottomed tube 26 (represented in radial section) as described above in relation to Figure 1;
- providing 201 with a tube, named extension tube 25, (represented in radial section) as described above in relation to Figure 1. In the embodiment represented in successive Figures 4, 5 and 6, the thickness of the wall 40 of said extension tube 25 is greater than the thickness of the cylindrical-shaped wall 34 of said bottomed tube 20,26 resulting in an increased resistance to mechanical strength applied to the sensing tip 1. The internal diameter of the cylindrical-shaped wall 34 of said bottomed tube 20,26 is larger than the internal diameter of said extension tube 40 and the external diameters of both said bottomed tube 20,26 and of said extension tube 40 are slightly equal. However, nothing prevents said bottomed tube 20,26 and said extension tube 40 from presenting slightly equal internal diameters, the external diameter of said extension tube 40 being larger than the external diameter of said bottomed tube 20,26. Nothing prevents both the internal diameter of said bottomed tube 20,26 and of said extension tube 40 from being different and both the external diameter of said bottomed tube 20,26 and of said extension tube 40 from being different.
- assembling 204 coaxially said proximal end 11 of said bottomed tube 20,26 and the first longitudinal end 35 of said extension tube 25 by welding, as described above in relation to Figure 1;
- providing 202,203 with a first metal wire 3 and a second metal wire 2 (represented in radial sections), as described above in relation to Figure 1;
- forming 205 a thermocouple 8, as described above in relation to Figure 1;
- introducing 206 the thermocouple 8 into the cylinder-shape container 7 (represented in radial section) as described above in relation to Figure 1.

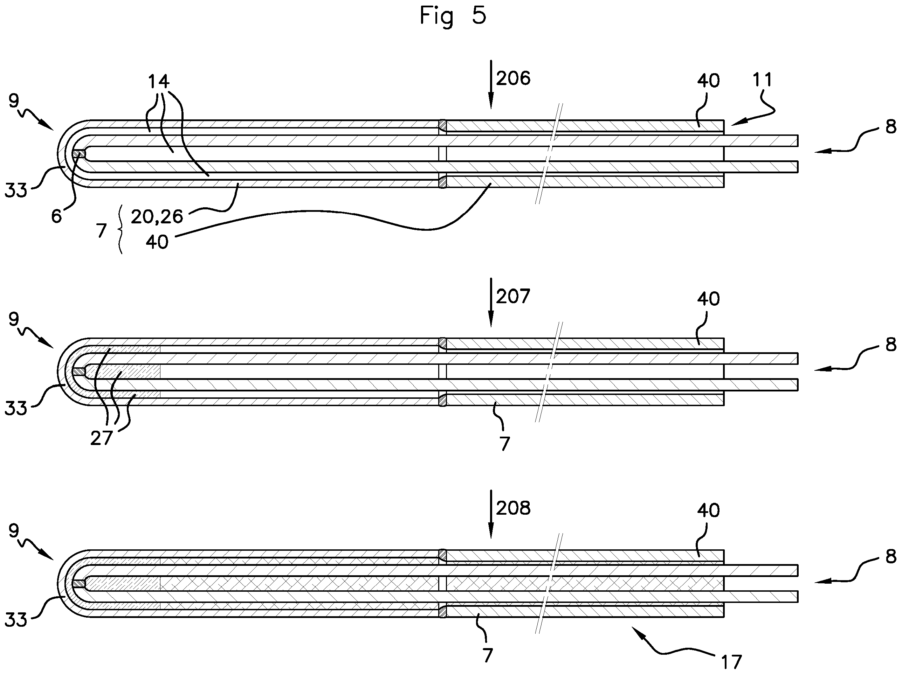

Further steps of a method according to the second embodiment of the invention are presented Figure 5. Further steps of this second embodiment comprise:
- introducing 207 a quantity of a thermal conductive ceramic powder 15 forming a layer 27 of said thermal conductive ceramic powder 15 in the free space 14 extending at said distal end 9 of said bottomed tube 20,26 forming the cylinder-shaped container 7 (as obtained from step 206), as described above in relation to Figure 2;
- completing 208 the filling of the space 14 left free inside the cylinder-shaped container 7 by the thermocouple 8 and the layer 27 of the thermal conductive ceramic powder 15 with an appropriate quantity of a mineral powdered material 18 of thermal conductivity lower than the thermal conductivity of the thermal conductive ceramic powder 15, as described above in relation to Figure 2.

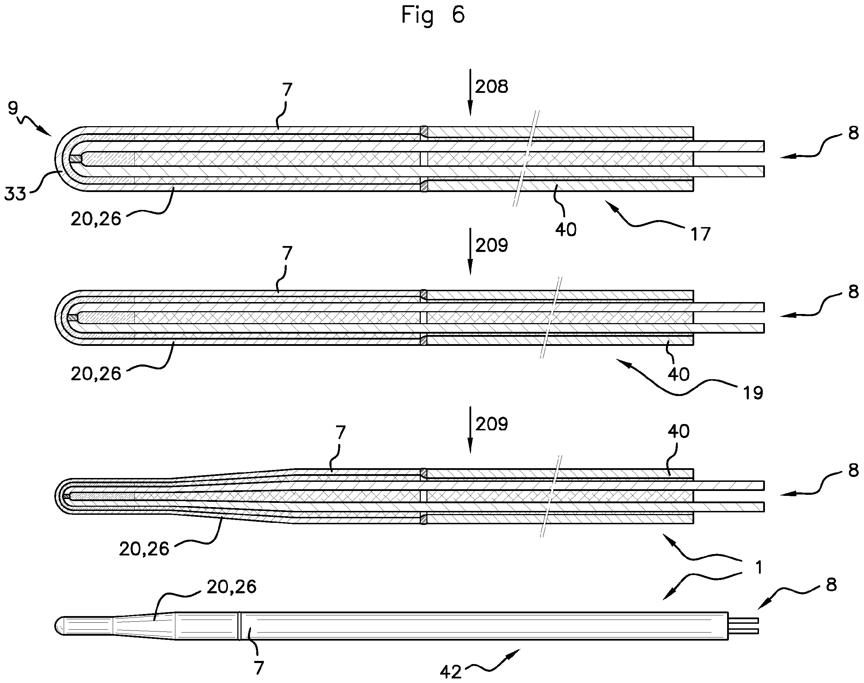

Ultimate steps of a method according to the second embodiment of the invention are presented Figure 6. Ultimate steps of this second embodiment comprise:
- applying 209 to the sheeted thermocouple 17 (as obtained from step 208) throughout its total length extending from said distal end 9 to said proximal end 11, a radial shrinking strength, as described above in relation to Figure 3, and;
- applying 210 to said distal end 9 of the shrunk sensing tip 19 and only to said distal end 9, a radial shrinking strength as described above in relation to Figure 3. A lateral general view 42 of the sensing tip 1 according to the invention is also represented figure 6.

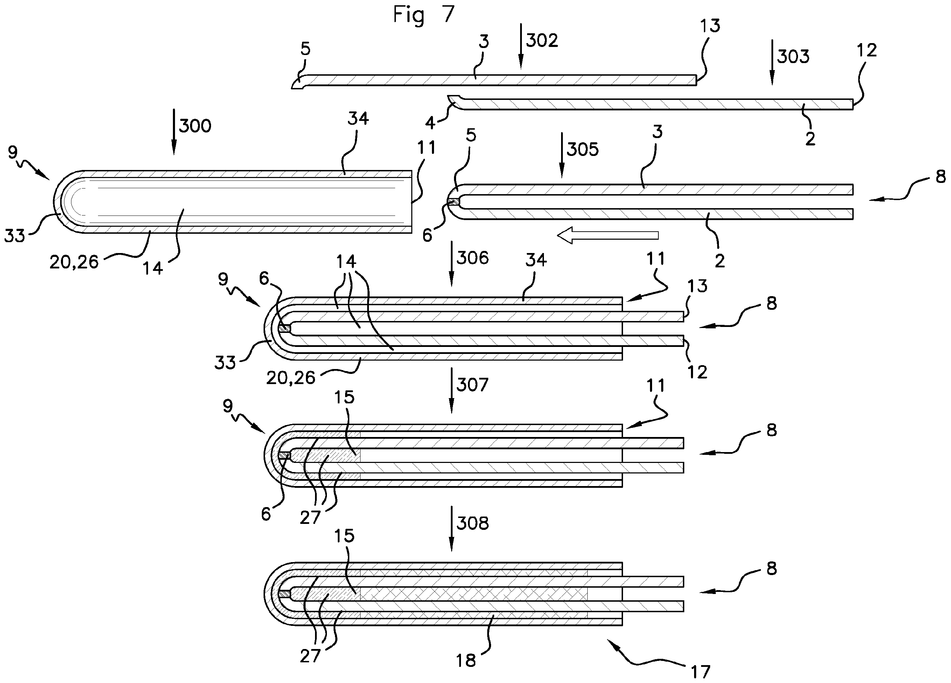

A method for manufacturing a sensing tip for a temperature sensing device according to a third embodiment of the invention is presented in successive Figures 7, 8, 9 and 10. Initial steps of a method according to the third embodiment of the invention are presented Figure 7. The initial steps of this first embodiment comprise:
- providing 300 with a tube, named bottomed tube 26 (represented in radial section) as described above in relation to Figure 1;
- providing 302 with a first metal wire 3 (represented in radial section) cut at the appropriate length to match with the length of said bottomed tube 20,26, as described above in relation to Figure 1;
- providing 303 with a second metal wire 2 (represented in radial section) cut at the appropriate length to match with the length of said bottomed tube 20,26, as described above in relation to Figure 1;
- forming 305 a thermocouple 8, as described above in relation to Figure 1;
- introducing 306 the thermocouple 8 into said bottomed tube 20,26 (represented in radial section) so that the thermocouple 8 extends in a free space 14 of said bottomed tube 20,26, coaxially with said bottomed tube 20,26, said hot junction of the thermocouple 8 being placed at said distal end 9 of said bottomed tube 20,26. The second ends 12,13 of the first and second metal wires 2,3 forming the thermocouple 8 protrude from said proximal end 11 of said bottomed tube 20,26;
- introducing 307 a quantity of a thermal conductive ceramic powder 15 forming a layer 27 of said thermal conductive ceramic powder 15 in the free space 14 extending at said distal end 9 of said bottomed tube 20,26. The thermal conductive ceramic powder 15 forms a thermal conductive contact between said hot junction 6 and the hemispherical-shaped bottom 33 of said bottomed tube 20,26, so that thermal energy of a sensed external medium can reach said hot junction 6 through said thermal conductive ceramic powder 15. Said thermal conductive ceramic powder 15 is selected in the group formed of ceramic material with high thermal conductivity, notably in the group formed of boron nitride (BN) powders and of aluminium nitride (AℓN) powders and mixtures thereof, and then;
- completing 308 the filling of the space 14 left free inside said bottomed tube 20,26 by the thermocouple 8 and the layer 27 of the thermal conductive ceramic powder 15 with an appropriate quantity of a mineral powdered material 18 of thermal conductivity lower than the thermal conductivity of the thermal conductive ceramic powder 15. Advantageously, the mineral powdered material 18 is cheaper than the thermal conductive ceramic powder 15 and the cost for manufacturing the sensing tip 1 is reduced. The mineral powdered material 18 can be selected in the group formed of zirconium dioxide (ZrO₂), magnesium oxide (MgO), alumina (Aℓ₂O₃) or other materials of thermal conductivity less than the thermal conductivity of the thermal conductive ceramic powder. However, in some embodiments, nothing prevents the mineral powdered material 18 from being a thermal conductive ceramic powder identical to the thermal conductive ceramic powder 15 forming the layer 27. With the completion of the filling 308, a sheeted thermocouple 17 is formed.

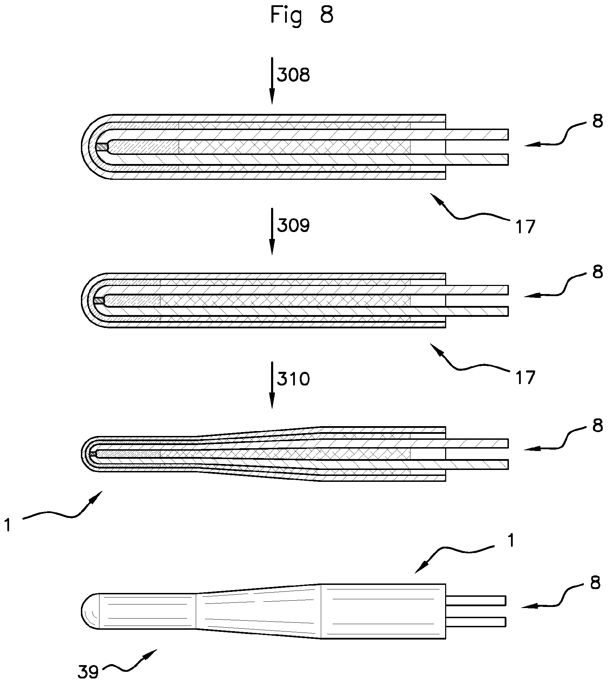

Subsequent steps of a method according to the third embodiment of the invention are presented Figure 8. Further steps of this first embodiment comprise:
- applying 309 to the sheeted thermocouple 17 (as obtained from step 308) throughout its total length extending from said distal end 9 to said proximal end 11, a radial shrinking strength adapted to form a shrunk sensing tip 19 of constant diameter in cross section from said distal end 9 to said proximal end 11, thus improving the mechanical resistance of the shrunk sensing tip 19 and of the sensing tip 1, and;
- applying 310 to said distal end 9 of the shrunk sensing tip 19 and only to said distal end 9, a radial shrinking strength to form a sensing tip 1 with increased compactness of the thermal conductive ceramic powder 15 at said distal end 9. A lateral view 39 of the sensing tip 1 according to the invention is also represented figure 3. The applications 309,310 of the radial shrinking strength can be performed by any suitable swaging method, for example by radial clamping, by forming (hot-forming or cold-forming), by stamping, by cold or hot-forging, by hammering or by magneto forming.

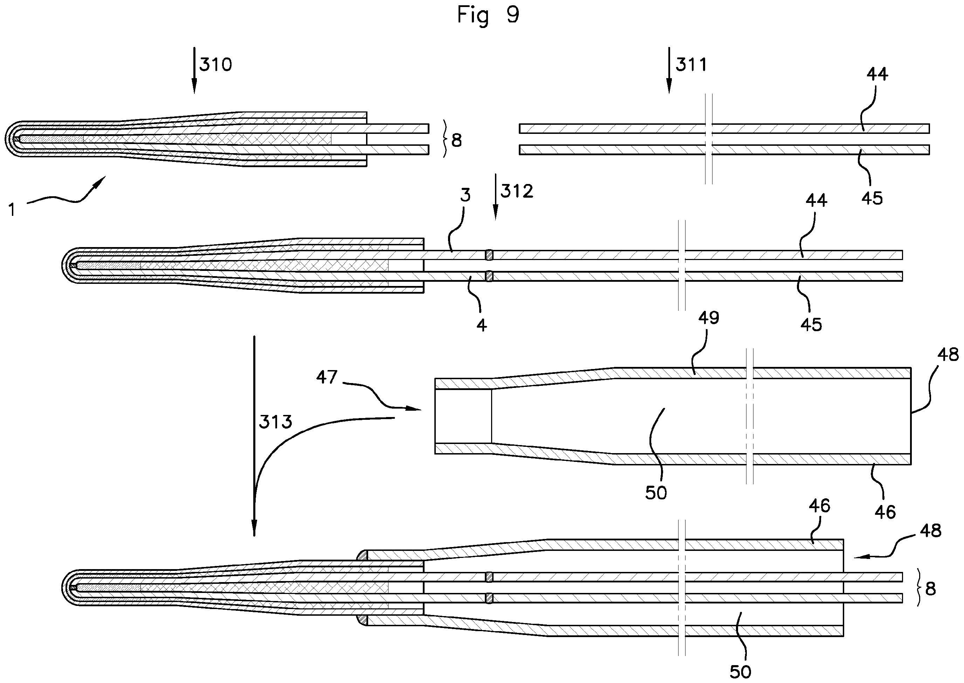

Further steps of a method according to the third embodiment of the invention are presented Figure 9. Further steps of this first embodiment comprise:
- providing 310 with a sensing tip 1 as described Figure 8;
- providing 311 with a first metal extension wire 44 and with a second metal extension wire 45 (represented in radial section) of distinct metals suitable to support a thermocouple 8;
- assembling 312 by welding the longitudinal end of the first metal wire 3 with one longitudinal end of the first metal extension wire 44, and the longitudinal end of the second metal wire 2 with one longitudinal end of the second metal extension wire 45;
- providing 313 with a tube, named extension tube 46, (represented in radial section) presenting two open longitudinal ends 47,48 and assembling said extension tube 46 and said bottomed tube 20,26 by radial overlap and welding the longitudinal end 47 of said extension tube 46 and the proximal end 11 of the cylindrical-shaped wall 34 of the sensing tip 1. Said extension tube 46 can be made of the same metal alloy as the metal alloy of said bottomed tube 20,26 or of a metal alloys distinct of the metal of said bottomed tube 20,26. In the third embodiment represented in successive Figures 7, 8, 9 and 10, the thickness of the wall 49 of said extension tube 46 is greater than the thickness of the cylindrical-shaped wall 34 of said bottomed tube 20,26. The internal diameter of the cross section of the longitudinal end 47 of said extension tube 46 is only slightly less than the external diameter of the cylindrical-shaped wall 34 of said bottomed tube 20,26 at the said proximal end 11. Said longitudinal end 47 is adapted to cooperate coaxially with said bottomed tube 20,26 to assemble said extensions tube 46 and said bottomed tube 20,26. The internal diameter of said extension tube 46 at said proximal end 48 is larger than the internal diameter of said extension tube 46 at said distal end 47.

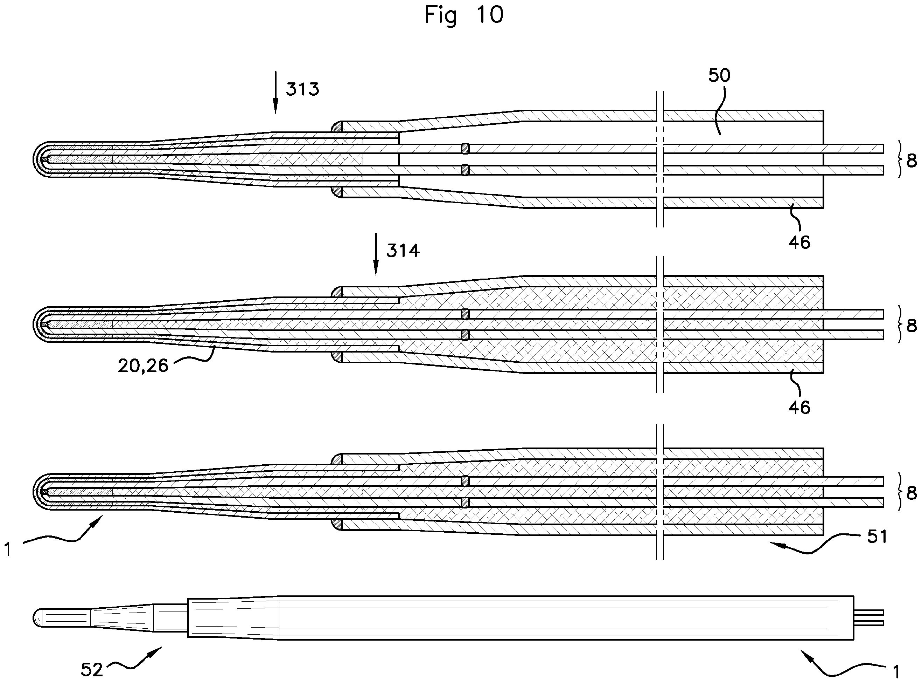

Ultimate steps of a method according to the third embodiment of the invention are presented Figure 10. Ultimate steps of this first embodiment comprise:
- filling 314 the inner space 50 left free inside said extension tube 46 by the first metal extension wire 44 and by the second metal extension wire 45 with an appropriate quantity of a mineral powdered material 18 of thermal conductivity lower than the thermal conductivity of the thermal conductive ceramic powder 15. Advantageously, the mineral powdered material 18 is cheaper than the thermal conductive ceramic powder 15 and the cost for manufacturing the sensing tip 1 is reduced. The mineral powdered material 18 can be selected in the group formed of zirconium dioxide (ZrO₂), magnesium oxide (MgO), alumina (Aℓ₂O₃) or other materials of thermal conductivity less than the thermal conductivity of the thermal conductive ceramic powder. Thereby an extended sheeted thermocouple 51 is formed.
- applying 315 to the extended sheeted thermocouple 51 throughout its total length extending from said distal end 9 to the proximal end of the extended sheeted thermocouple 51, a radial shrinking strength adapted to form a sensing tip 1. A lateral view 52 of a sensing tip 1 according to the invention is also represented figure 10.

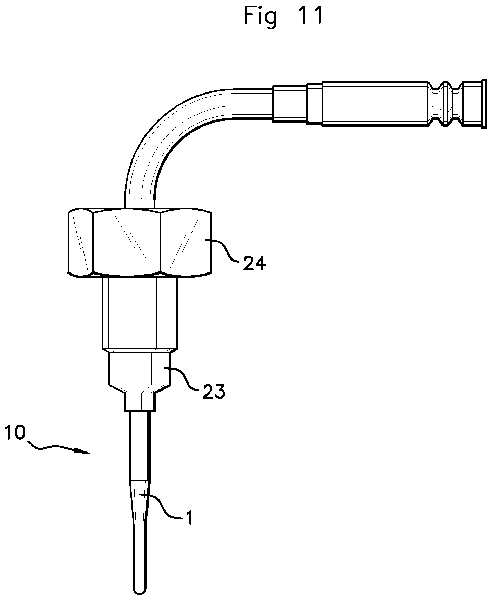

A temperature sensing device 10 according to the invention is presented in Figure 11. The temperature sensing device comprises a sensing tip 1 according to the invention. The metal wires of the sensing tip 1 are connected to the terminals of a voltmeter (not shown) for conversion of the sensed potential value into temperature value. It also comprises means for ensure a tight connection between the temperature sensor device 10 and a compartment (not shown) in which the temperature is to be measured. Means for tight connection comprise a sealing flange 23. It also comprises means for fixing the temperature sensing device 10 with the compartment. Said fixation means comprise a mounting nut 24 for securing the sealing of the sensing tip to the compartment.

The method according to the invention enables easier manufacturing of an universal sensing tip for a temperature sensing device, with improved response time and with improved robustness due to the optimised design.

## Claims

1. - Method for manufacturing a sensing tip (1) for a temperature sensing device (10), said method comprising the steps of:
a1) providing with a thermocouple (8) presenting a welding, named hot junction (6), linking a first longitudinal end (4) of a first metal wire (2) of the thermocouple (8) and a first longitudinal end (5) of a second metal wire (3) of the thermocouple (8); the first metal wire (2) and the second metal wire (2) being made of distinct materials and so chosen to form the thermocouple (8), and;
a2) providing with an empty cylinder-shaped container (7) presenting one closed longitudinal end, named distal end (9) and one open longitudinal end, named proximal end (11) opposite to said distal end (9), then;
a3) disposing the thermocouple (8) into the cylinder-shaped container (7), said hot junction (6) of the thermocouple (8) being positioned at said distal end (9), then;
b) filling a free space (14) extending inside the cylinder-shaped container (7) with a quantity of at least one mineral powdered material (18), at least one part of the at least one mineral powdered material (18) being a thermal conductive ceramic powder (15), said thermal conductive ceramic powder (15) forming a layer, named distal layer (27), of said thermal conductive ceramic powder (15) at least at said distal end (9); and
c) adding a layer (30) contacting the distal layer (27) by completing the filling of the free space (14) of the cylinder-shaped container (7) with a quantity of a mineral powdered material (18) distinct of said thermal conductive ceramic powder (15) and with lower thermal conductivity than the thermal conductivity of the thermal conductive ceramic powder (15) forming the layer (27) of the thermal conductive ceramic powder (15),
thus forming the sensing tip (1).

2. - Method according to claim 1, **characterized in that** it comprises:
- assembling together a tube with two open longitudinal ends, named extension tube (25), and a tube with one closed longitudinal end, named bottomed tube (26) by longitudinal alignment of said extension tube (25) and said bottomed tube (26), thus forming the cylinder-shaped container (7), and;
- disposing the thermocouple (8) into the cylinder-shaped container (7), so that;
said hot junction (6) of the thermocouple (8) is positioned at said distal end (9), said hot junction (6) linking a first longitudinal end (4) of a first metal wire (2) of the thermocouple (8) and a first longitudinal end (5) of a second metal wire (3) of the thermocouple (8), and so that;
a second end (12) of the first metal wire (2) and a second end (13) of the second metal wire (3) protrude from said proximal end (11) of the cylinder-shaped container (7) and are destined to be connected to terminals of a voltmeter ;
the first metal wire (2) and the second metal wire (2) being made of distinct materials and so chosen to form the thermocouple (8).

3. - Method according to claim 2, **characterized in that** said bottomed tube (26) is a weldless bottomed tube (20).

4. - Method according to one of claims 1 to 3, **characterized in that** step b) comprises:
b1). forming said layer (27) of said thermal conductive ceramic powder (15) wherein the thermal conductive ceramic powder (15) contacts said hot junction (6) and an inner face (16) of the cylinder-shaped container (7) at said distal end (9).

5. - Method according to one of claims 1 to 4, **characterized in that** it comprises applying a radial shrinking strength (29) to at least said distal end (9) of the sensing tip (1), thus forming a sensing tip (1) with increased compactness of the thermal conductive ceramic powder (15) at least at said distal end (9).

6. - Method according to one of claims 1 to 5, **characterized in that** it comprises:
- applying to the sensing tip (1) throughout its total length extending from said distal end (9) to said proximal end (11), a radial shrinking strength (28) adapted to form a shrunk sensing tip (19) of constant diameter in cross section from said distal end (9) to said proximal end (11), thus improving the mechanical resistance of the shrunk sensing tip (19) and of the sensing tip (1), and;
- applying to said distal end (9) of the sensing tip (1) and only to said distal end (9), a radial shrinking strength (29) to form a sensing tip (1) with increased compactness of the thermal conductive ceramic powder (15) at said distal end (9).

7. - Method according to one of claims 1 to 6, **characterized in that** the thermal conductive ceramic powder (15) is so chosen to present:
- a thermal conductivity at 20°C of at least 3 W.m⁻¹.K⁻¹, and;
- an electrical resistivity at room temperature greater than 1 GS2.m.

8. - Method according to one of claims 1 to 7, **characterized in that** the mineral powdered material (18) is a mineral powdered material (21) of thermal conductivity at 20°C less than the thermal conductivity at 20°C of the thermal conductive ceramic powder (15).

9. - Sensing tip (1) for a temperature sensor device (10) obtained by a method according to any of claims 1-8, comprising:
- a thermocouple (8) extending in a cylinder-shaped container (7) presenting one closed longitudinal end, named distal end (9) and one open longitudinal end, named proximal end (11) opposite to said distal end (9), the thermocouple (8) extending in the cylinder-shaped container (7) so that:
o a welding, named hot junction (6), linking a first end (4) of a first metal wire (2) of the thermocouple (8) and a first end (5) of a second metal wire (3) of the thermocouple (8), is disposed inside the cylinder-shaped container (7) at said distal end (9);
o a second end (12) of the first metal wire (2) and a second end (13) of the second metal wire (3) protrude from said proximal end (11); the second ends (12,13) of the first and second metal wires (2,3) being destined to be connected to terminals of a voltmeter of the temperature sensor device (10); the first metal wire (2) and the second metal wire (2) being made of distinct materials and forming the thermocouple (8); **characterized in that** it further comprises:
- a quantity of at least one mineral powdered material (18) filling a free space (14) extending inside the cylinder-shaped container (7), at least one part of the at least one mineral powdered material (18) being a thermal conductive ceramic powder (15), said thermal conductive ceramic powder (15) forming a layer (27) of said thermal conductive ceramic powder (15) at least at said distal end (9) and contacting said hot junction (6) and an inner face (16) of said distal end (9) of the cylinder-shaped container (7); wherein it comprises a layer (30) of at least one mineral powdered material (18) contacting the layer (27) of said thermal conductive ceramic powder (15), said mineral powdered material (18) being distinct of said thermal conductive ceramic powder (15) and presenting a thermal conductivity lower than the thermal conductivity of the thermal conductive ceramic powder (15).

10. - Sensing tip (1) according to claim 9, **characterized in that** the cylinder-shaped container (7) is formed of a tube with two open longitudinal ends, named extension tube (25), and a tube with one closed end, named bottomed tube (26), longitudinally aligned and solidarized with each other, one open longitudinal end of said extension tube (25) being hermetically linked to the open longitudinal end of said bottomed tube (26).

11. - Sensing tip (1) according to one of claims claim 9 to 10, **characterized in that** said distal end (9) presents a diameter of a cross section smaller than the diameter of a transverse cross section of the sensing tip (1) at said proximal end (11).

12. - Temperature sensing device (10) comprising a sensing tip (1) according to one of claims 9 to 11, **characterized in that** the first metal wire (2) and the second metal wire (3) are connected to a voltmeter.

13. - Combustion engine comprising a temperature sensing device (10) according to claim 12.

14. - Engine vehicle comprising a high temperature sensing device (10) according to claim 13.

## Patentansprüche

1. Verfahren zur Herstellung einer Messspitze (1) für eine Temperaturmessvorrichtung (10), wobei das Verfahrung die folgenden Schritte umfasst:
a1) Bereitstellen eines Thermoelements (8), das eine Schweißung aufweist, bezeichnet als Heißlötstelle (6), Verbinden eines ersten längs gerichteten Endes (4) eines ersten Metalldrahts (2) des Wärmeelements (8) und eines ersten längs gerichteten Endes (5) eines zweiten Metalldrahts (3) des Wärmeelements (8); wobei der erste Metalldraht (2) und der zweite Metalldraht (2) aus verschiedenen Materialien hergestellt und so gewählt sind, dass sie das Thermoelement (8) bilden, und
a2) Bereitstellen eines leeren zylinderförmigen Behälters (7), der ein geschlossenes längs gerichtetes Ende, bezeichnet als distales Ende (9), und ein offenes längs gerichtetes Ende, bezeichnet als proximales Ende (11), gegenüber dem distalen Ende (9) aufweist; dann
a3) Anordnen des Thermoelements (8) in den zylinderförmigen Körper (7), wobei die Heißlötstelle (6) des Thermoelements (8) an dem distalen Ende (9) positioniert ist, dann
b) Füllen eines freien Raums (14), der sich innerhalb des zylinderförmigen Behälters (7) erstreckt, mit einer Menge mindestens eines mineralischen Pulvermaterials (18), wobei mindestens ein Teil des mindestens einen mineralischen Pulvermaterials (18) ein thermisch leitendes keramisches Pulver (15) ist, wobei das thermisch leitende keramische Pulver (15) eine Schicht, bezeichnet als distale Schicht (27), des thermisch leitenden keramischen Pulvers (15) mindestens an dem distalen Ende (9) bildet; und
c) Hinzufügen einer Schicht (30), die mit der distalen Schicht (27) in Kontakt kommt, durch Vervollständigen des Füllens des freien Raums (14) des zylinderförmigen Behälters (7) mit einer Menge eines mineralischen Pulvermaterials (18), das verschieden von dem thermisch leitenden keramischen Pulver (15) ist und eine niedrigere thermische Leitfähigkeit als die thermische Leitfähigkeit des thermisch leitenden keramischen Pulvers (15) aufweist, das die Schicht (27) des thermisch leitenden keramischen Pulvers (15) bildet, wodurch die Messspitze (1) gebildet wird.

2. Verfahren nach Anspruch 1, **dadurch gekennzeichnet, dass** es Folgendes umfasst:
- Zusammenbauen eines Rohrs mit zwei offenen längs gerichteten Enden, bezeichnet als Erweiterungsrohr (25), und eines Rohrs mit einem geschlossenen längs gerichteten Ende, bezeichnet als Rohr mit Boden (26), durch eine längs gerichtete Ausrichtung des Erweiterungsrohrs (25) und des Rohrs mit Boden (26), wodurch der zylinderförmige Behälter (7) gebildet wird, und:
- Anordnen des Thermoelements (8) in den zylinderförmigen Behälter (7), so dass die Heißlötstelle (6) des Thermoelements (8) an dem distalen Ende (9) positioniert ist, wobei die Heißlötstelle (6) ein erstes längs gerichtetes Ende (4) eines ersten Metalldrahts (2) des Thermoelements (8) und ein erstes längs gerichtetes Ende (5) eines zweiten Metalldrahts (3) des Thermoelements (8) verbindet, und so dass:
ein zweites Ende (12) des ersten Metalldrahts (2) und ein zweites Ende (13) des zweiten Metalldrahts (3) von dem proximalen Ende (11) des zylinderförmigen Behälters (7) vorsteht und ausgerichtet sind, um mit Endgeräten eines Voltmeters verbunden zu sein;
wobei der erste Metalldraht (2) und der zweite Metalldraht (2) aus verschiedenen Materialien hergestellt und so gewählt sind, dass sie das Thermoelement (8) bilden.

3. Verfahren nach Anspruch 2, **dadurch gekennzeichnet, dass** das Rohr mit Boden (26) ein nahtloses Rohr mit Boden (20) ist.

4. Verfahren nach einem der Ansprüche 1 bis 3, **dadurch gekennzeichnet, dass** Schritt b) Folgendes umfasst:
b1. Bilden der Schicht (27) des thermisch leitenden keramischen Pulvers (15), wobei das thermisch leitende keramische Pulver (15) mit der Heißlötstelle (6) und einer inneren Fläche (16) des zylinderförmigen Behälters (7) an dem distalen Ende (9) in Kontakt kommt.

5. Verfahren nach einem der Ansprüche 1 bis 4, **dadurch gekennzeichnet, dass** es das Anwenden einer radialen Schrumpffestigkeit (29) auf mindestens das distale Ende (9) der Messspitze (1) umfasst, wodurch eine Messspitze (1) mit erhöhter Kompaktheit des thermisch leitenden keramischen Pulvers (15) mindestens an dem distalen Ende (9) gebildet wird.

6. Verfahren nach einem der Ansprüche 1 bis 5, **dadurch gekennzeichnet, dass** es Folgendes umfasst:
- Anwenden auf die Messspitze (1) auf ihrer gesamten Länge, die sich von dem distalen Ende (9) zu dem proximalen Ende (11) erstreckt, einer radialen Schrumpffestigkeit (28), die ausgelegt ist, um eine geschrumpfte Messspitze (19) mit einem konstanten Durchmesser im Querschnitt von dem distalen Ende (9) zu dem proximalen Ende (11) zu bilden, wodurch die mechanische Widerstandskraft der geschrumpften Messspitze (19) und der Messspitze (1) verbessert wird, und
- Anwenden auf das distale Ende (9) der Messspitze (1) und nur auf das distale Ende (9) einer radialen Schrumpffestigkeit (29), um eine Messspitze (1) mit erhöhter Kompaktheit des thermisch leitenden keramischen Pulvers (15) an dem distalen Ende (9) zu bilden.

7. Verfahren nach einem der Ansprüche 1 bis 6, **dadurch gekennzeichnet, dass** das thermisch leitende keramische Pulver (15) so gewählt ist, dass es Folgendes darstellt:
- eine thermische Leitfähigkeit bei 20 °C von mindestens 3 W.^{m-1}.^{K-1}, und
- eine elektrische Widerstandskraft bei Raumtemperatur von mehr als 1 GQ.m.

8. Verfahren nach einem der Ansprüche 1 bis 7, **dadurch gekennzeichnet, dass** das mineralische Pulvermaterial (18) ein mineralisches Pulvermaterial (21) mit einer thermischen Leitfähigkeit bei 20 °C von weniger als der thermischen Leitfähigkeit bei 20 ºC des thermisch leitenden keramischen Pulvers (15) ist.

9. Messspitze (1) für eine Temperaturmessvorrichtung (10), erhalten durch ein Verfahren nach einem der Ansprüche 1 - 8 (1), umfassend:
- ein Thermoelement (8), das sich in einem zylinderförmigen Behälter (7) erstreckt, der ein geschlossenes längs gerichtetes Ende aufweist, bezeichnet als distales Ende (9), und ein offenes längs gerichtetes Ende, bezeichnet als proximales Ende (11), gegenüber dem distalen Ende (9), wobei sich das Thermoelement (8) in den zylinderförmigen Behälter (7) erstreckt, so dass:
-- eine Schweißung, bezeichnet als Heißlötstelle (6), die ein erstes Ende (4) eines ersten Metalldrahts (2) des Thermoelements (8) und ein erstes Ende (5) eines zweiten Metalldrahts (3) des Thermoelements (8) verbindet, innerhalb des zylinderförmigen Behälters (7) an dem distalen Ende (9) angeordnet ist;
- ein zweites Ende (12) des ersten Metalldrahts (2) und ein zweites Ende (13) des zweiten Metalldrahts (3) von dem proximalen Ende (11) vorspringen;
wobei die zweiten Enden (12, 13) des ersten und zweiten Metalldrahts (2, 3) ausgerichtet sind, um mit Klemmen eines Voltmeters der Temperaturmessvorrichtung (10) verbunden zu sein;
wobei der erste Metalldraht (2) und der zweite Metalldraht (2) aus verschiedenen Materialien hergestellt sind und das Thermoelement (8) bilden;
**dadurch gekennzeichnet, dass** sie weiter Folgendes umfasst:
- eine Menge mindestens eines mineralischen Pulvermaterials (18), das einen freien Raum (14) füllt, der sich innerhalb des zylinderförmigen Behälters (7) erstreckt, wobei mindestens ein Teil des mindestens einen mineralischen Pulvermaterials (18) ein thermisch leitendes keramisches Pulver (15) ist, wobei das thermisch leitende keramische Pulver (15) eine Schicht (27) des thermisch leitenden keramischen Pulvers (15) mindestens an dem distalen Ende (9) bildet und die Heißlötstelle (6) und eine innere Fläche (16) des distalen Endes (9) des zylinderförmigen Behälters (7) miteinander in Kontakt bringt;
wobei sie eine Schicht (30) mindestens eines mineralischen Pulvermaterials (18) umfasst, die mit der Schicht (27) des thermisch leitenden keramischen Pulvers (15) in Kontakt kommt, wobei das mineralische Pulvermaterial (18) verschieden von dem thermisch leitenden keramischen Pulver (15) ist und eine thermische Leitfähigkeit aufweist, die geringer als die thermische Leitfähigkeit des thermisch leitenden keramischen Pulvers (15) ist.

10. Messspitze (1) nach Anspruch 9, **dadurch gekennzeichnet, dass** der zylinderförmige Behälter (7) aus einem Rohr mit zwei offenen längs gerichteten Enden, bezeichnet als Erweiterungsrohr (25), und einem Rohr mit einem geschlossenem längs gerichteten Ende, bezeichnet als Rohr mit Boden (26), gebildet ist, die längs gerichtet ausgefluchtet und miteinander fest verbunden sind, wobei ein offenes längs gerichtetes Enden des Erweiterungsrohrs (25) thermisch mit dem offenen längs gerichteten Ende des Rohrs mit Boden (26) verbunden ist.

11. Messspitze (1) nach einem der Ansprüche 9 bis 10, **dadurch gekennzeichnet, dass** das distale Ende (9) einen Durchmesser eines Querschnitts aufweist, der kleiner als der Durchmesser eines transversalen Querschnitts der Messspitze (1) an dem proximalen Ende (11) ist.

12. Temperaturmessvorrichtung (10), umfassend eine Messspitze (1) nach einem der Ansprüche 9 bis 11, **dadurch gekennzeichnet, dass** der erste Metalldraht (2) und der zweite Metalldraht (3) mit einem Voltmeter verbunden sind.

13. Verbrennungsmotor, umfassend eine Temperaturmessvorrichtung (10) nach Anspruch 12.

14. Motorfahrzeug, umfassend eine Hochtemperaturmessvorrichtung (10) nach Anspruch 13.

## Revendications

1. Procédé de fabrication d'une extrémité de détection (1) destinée à un dispositif de détection de température (10), ledit procédé comprenant les étapes consistant à :
a1) prévoir un thermocouple (8) qui présente une soudure, appelée « jonction à chaud » (6), qui relie une première extrémité longitudinale (4) d'un premier fil métallique (2) du thermocouple (8) et une première extrémité longitudinale (5) d'un second fil métallique (3) du thermocouple (8) ; le premier fil métallique (2) et le second fil métallique (2) étant composés de matériaux distincts et choisis pour former le thermocouple (8), et ;
a2) prévoir un contenant de forme cylindrique vide (7) qui présente une extrémité longitudinale fermée, appelée « extrémité distale » (9) et une extrémité longitudinale ouverte, appelée « extrémité proximale » (11), opposée à ladite extrémité distale (9), puis ;
a3) disposer le thermocouple (8) dans le contenant de forme cylindrique (7), ladite jonction à chaud (6) du thermocouple (8) étant positionnée au niveau de ladite extrémité distale (9), puis ;
b) le remplissage d'un espace libre (14) qui s'étend à l'intérieur du contenant de forme cylindrique (7) avec une quantité d'au moins un matériau en poudre minéral (18), au moins une partie du au moins un matériau en poudre minéral (18) étant une poudre de céramique conductrice thermique (15), ladite poudre de céramique conductrice thermique (15) formant une couche, appelée « couche distale » (27), de ladite poudre de céramique conductrice thermique (15) au moins au niveau de ladite extrémité distale (9) ; et
c) l'ajout d'une couche (30) qui touche la couche distale (27) en remplissant l'espace libre (14) du contenant de forme cylindrique (7) avec une quantité d'un matériau en poudre minéral (18) distinct de ladite poudre de céramique conductrice thermique (15) et qui présente une conductivité thermique inférieure à celle de la poudre de céramique conductrice thermique (15) formant la couche (27) de la poudre de céramique conductrice thermique (15),
formant ainsi l'extrémité de détection (1).

2. Procédé selon la revendication 1, **caractérisé en ce qu'**il comprend :
- l'assemblage d'un tube à deux extrémités longitudinales ouvertes, appelé « tube d'extension » (25), et d'un tube à une extrémité longitudinale fermée, appelé « tube à fond » (26), par alignement longitudinal dudit tube d'extension (25) et dudit tube à fond (26), afin de former le contenant de forme cylindrique (7), et ;
- le placement du thermocouple (8) dans le contenant de forme cylindrique (7), de sorte que : ladite jonction à chaud (6) du thermocouple (8) soit positionnée au niveau de ladite extrémité distale (9), ladite jonction à chaud (6) reliant une première extrémité longitudinale (4) d'un premier fil métallique (2) du thermocouple (8) et une première extrémité longitudinale (5) d'un second fil métallique (3) du thermocouple (8), etc. ;
une seconde extrémité (12) du premier fil métallique (2) et une seconde extrémité (13) du second fil métallique (3) dépassent de ladite extrémité proximale (11) du contenant en forme de cylindre (7) et sont destinées à être reliées aux bornes d'un voltmètre ;
le premier fil métallique (2) et le second fil métallique (2) étant composés de matériaux distincts et choisis pour former le thermocouple (8).

3. Procédé selon la revendication 2, **caractérisé en ce que** ledit tube à fond (26) est un tube à fond sans soudure (20).

4. Procédé selon l'une des revendications 1 à 3, **caractérisé en ce que** l'étape b) comprend :
b1). la formation de ladite couche (27) de ladite poudre de céramique conductrice thermique (15), dans lequel la poudre de céramique conductrice thermique (15) est en contact avec ladite jonction à chaud (6) et une face interne (16) du contenant de forme cylindrique (7) au niveau de ladite extrémité distale (9).

5. Procédé selon l'une des revendications 1 à 4, **caractérisé en ce qu'**il comprend l'application d'une force de rétrécissement radiale (29) à au moins ladite extrémité distale (9) de l'extrémité de détection (1), formant ainsi une extrémité de détection (1) avec une compacité accrue de la poudre de céramique conductrice thermique (15) au moins au niveau de ladite extrémité distale (9).

6. Procédé selon l'une des revendications 1 à 5, **caractérisé en ce qu'**il comprend :
- l'application, à l'extrémité de détection (1), sur toute sa longueur qui s'étend de ladite extrémité distale (9) jusqu'à ladite extrémité proximale (11), d'une force de rétrécissement radiale (28) adaptée pour former une extrémité de détection rétrécie (19) d'un diamètre de section transversale constant entre ladite extrémité distale (9) et ladite extrémité proximale (11), améliorant ainsi la résistance mécanique de l'extrémité de détection rétrécie (19) et de l'extrémité de détection (1), et ;
- l'application, à ladite extrémité distale (9) de l'extrémité de détection (1) et uniquement à ladite extrémité distale (9), d'une force de rétrécissement radiale (29) afin de former une extrémité de détection (1) avec une compacité accrue de la poudre de céramique conductrice thermique (15) au niveau de ladite extrémité distale (9).

7. Procédé selon l'une des revendications 1 à 6, **caractérisé en ce que** la poudre de céramique conductrice thermique (15) est choisie afin de présenter :
- une conductivité thermique à 20°C d'au moins 3 W.m⁻¹.K⁻¹, et ;
- une résistivité électrique à température ambiante supérieure à 1 GΩ.m.

8. Procédé selon l'une des revendications 1 à 7, **caractérisé en ce que** le matériau en poudre minéral (18) est un matériau en poudre minéral (21) qui présente une conductivité thermique à 20°C inférieure à la conductivité thermique à 20°C de la poudre de céramique conductrice thermique (15).

9. Extrémité de détection (1) destinée à un capteur de température (10) obtenue par un procédé selon l'une quelconque des revendications 1 à 8, comprenant :
- un thermocouple (8) qui s'étend dans un contenant de forme cylindrique (7) qui présente une extrémité longitudinale fermée, appelée « extrémité distale » (9), et une extrémité longitudinale ouverte appelée « extrémité proximale » (11), opposée à ladite extrémité distale (9), le thermocouple (8) s'étendant dans le contenant de forme cylindrique (7) de sorte que :
- une soudure, appelée « jonction à chaud » (6), qui relie une première extrémité (4) d'un premier fil métallique (2) du thermocouple (8) et une première extrémité (5) d'un second fil métallique (3) du thermocouple (8), soit disposée à l'intérieur du contenant de forme cylindrique (7) au niveau de ladite extrémité distale (9) ;
- une seconde extrémité (12) du premier fil métallique (2) et une seconde extrémité (13) du second fil métallique (3) dépassent de ladite extrémité proximale (11) ;
les secondes extrémités (12, 13) du premier et du second fils métalliques (2, 3) étant destinées à être reliées aux bornes d'un voltmètre du capteur de température (10) ;
le premier fil métallique (2) et le second fil métallique (2) étant composés de matériaux distincts et formant le thermocouple (8), **caractérisé en ce qu'**il comprend en outre :
- une quantité d'au moins un matériau en poudre minéral (18) qui remplit un espace libre (14) qui s'étend à l'intérieur du contenant de forme cylindrique (7), au moins une partie du au moins un matériau en poudre minéral (18) étant une poudre de céramique conductrice thermique (15), ladite poudre de céramique conductrice thermique (15) formant une couche (27) de ladite poudre de céramique conductrice thermique (15) au moins au niveau de ladite extrémité distale (9) et étant en contact avec ladite jonction à chaud (6) et une face interne (16) de ladite extrémité distale (9) du contenant de forme cylindrique (7) ;
dans lequel il comprend une couche (30) d'au moins un matériau en poudre minéral (18) en contact avec la couche (27) de ladite poudre de céramique conductrice thermique (15), ledit matériau en poudre minéral (18) étant distinct de ladite poudre de céramique conductrice thermique (15) et présentant une conductivité thermique inférieure à la conductivité thermique de la poudre de céramique conductrice thermique (15).

10. Extrémité de détection (1) selon la revendication 9, **caractérisée en ce que** le contenant de forme cylindrique (7) est formé d'un tube avec deux extrémités longitudinales ouvertes, appelé « tube d'extension » (25), et d'un tube avec une extrémité fermée, appelé « tube à fond » (26), alignés longitudinalement et solidarisés l'un avec l'autre, une extrémité longitudinale ouverte dudit tube d'extension (25) étant hermétiquement reliée à l'extrémité longitudinale ouverte dudit tube à fond (26).

11. Extrémité de détection (1) selon l'une des revendications 9 à 10, **caractérisée en ce que** ladite extrémité distale (9) présente un diamètre de section transversale inférieur au diamètre d'une section transversale de l'extrémité de détection (1) au niveau de ladite extrémité proximale (11).

12. Dispositif de détection de température (10) comprenant une extrémité de détection (1) selon l'une des revendications 9 à 11, **caractérisé en ce que** le premier fil métallique (2) et le second fil métallique (3) sont reliés à un voltmètre.

13. Moteur à combustion comprenant un dispositif de détection de température (10) selon la revendication 12.

14. Véhicule à moteur comprenant un dispositif de détection de température élevée (10) selon la revendication 13.
